(19) Europäisches Patentamt
European Patent Office
Office européen des brevets

(11) **EP 2 781 016 B1**

(12) **EUROPÄISCHE PATENTSCHRIFT**

(45) Veröffentlichungstag und Bekanntmachung des Hinweises auf die Patenterteilung:
**18.03.2020 Patentblatt 2020/12**

(21) Anmeldenummer: **12798606.5**

(22) Anmeldetag: **13.11.2012**

(51) Int Cl.:
**H02P 21/14** (2016.01)   **H02P 21/00** (2016.01)

(86) Internationale Anmeldenummer:
**PCT/EP2012/004715**

(87) Internationale Veröffentlichungsnummer:
**WO 2013/072039 (23.05.2013 Gazette 2013/21)**

(54) **SYSTEM ZUM BETREIBEN EINER WECHSELRICHTERGESPEISTEN ELEKTRISCHEN DREHFELDMASCHINE**

SYSTEM FOR OPERATING AN INVERTER-FED POLYPHASE ELECTRIC MACHINE

SYSTÈME POUR FAIRE FONCTIONNER UNE MACHINE ÉLECTRIQUE POLYPHASE ALIMENTÉE PAR UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.11.2011   DE 102011118480**

(43) Veröffentlichungstag der Anmeldung:
**24.09.2014   Patentblatt 2014/39**

(73) Patentinhaber: **SEW-EURODRIVE GmbH & Co. KG 76646 Bruchsal (DE)**

(72) Erfinder:
• **REINHARDT, Volkmar 69124 Heidelberg (DE)**
• **WINZER, Patrick 76139 Karlsruhe (DE)**
• **EPSKAMP, Torsten 75015 Bretten (DE)**
• **HARTMANN, Matthias 85092 Kösching (DE)**
• **SCHUSTER, Thomas 73113 Ottenbach (DE)**

(56) Entgegenhaltungen:
**DE-A1-102006 004 034     US-A- 5 565 752 US-B1- 6 194 865**

• **GODOY SIMOES M ET AL: "Neural network based estimation of feedback signals for a vector controlled induction motor drive", INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE, 2. Oktober 1994 (1994-10-02), Seiten 471-479, XP010124041, ISBN: 978-0-7803-1993-6**

**Beschreibung**

Die Erfindung betrifft ein System zum Betreiben einer wechselrichtergespeisten elektrischen Drehfeldmaschine.

Es ist bekannt, eine elektrische Drehfeldmaschine von einem Wechselrichter zu speisen.

Aus der DE 10 2006 004034 A1 ist ein Verfahren zum geberlosen Betrieb einer stromrichtergespeisten permanenterregten Synchronmaschine mit einem Testsignal bekannt.

Aus der Veröffentlichung GODOY SIMONES M et al: "Neural network based estimation of feedback signals for a vector controlles induction motor drive" INDUSTRY APPLICATIONS SOCIETY ANNUAL MEETING, 1994 , Conference record of the 1994 IEEE Denver, Co, USA 2 - 6 Oct. 1994, New York, NY, USA, IEEE 2. Oktober 1994, Seiten 471 - 479, ISBN:978-0-7803-1993-6, XP010124041 ist eine Vektorregelung mit einem neuronalen Netzwerk als Bestimmungsmittel bekannt.

Aus der US 5 565 752 A ist eine Verfahren zur Schätzung von Position und Geschwindigkeit bekannt.

Aus der US 6 194 865 B1 ist ein Regelverfahren für eine elektrische rotierende Maschine bekannt.

Der Erfindung liegt daher die Aufgabe zugrunde, beim Betrieb einer Elektromaschine Energie einzusparen.

Erfindungsgemäß wird die Aufgabe bei dem System nach den in Anspruch 1 angegebenen Merkmalen gelöst.

Wichtige Merkmale der Erfindung bei dem System sind, dass das System zum Betreiben einer wechselrichtergespeisten elektrischen Drehfeldmaschine vorgesehen ist,
wobei der Motorstrom erfasst wird und daraus ein Statorstromraumzeiger bestimmt wird,
wobei der Statorspannungsraumzeiger bestimmt wird aus zumindest einem erfassten Spannungswert, insbesondere Zwischenkreisspannungswert, insbesondere und gegebenenfalls aus einem vom Wechselrichter ausgegebenen Pulsweitenmodulationssignal, insbesondere Pulsweitenmodulationsanteil,
wobei der Statorstromraumzeiger und der Statorspannungsraumzeiger einem Beobachter zugeführt werden, der daraus einerseits einen Referenzwinkel bestimmt und andererseits einen Drehzahl-Istwert,
welcher einem Bestimmungsmittel zugeführt wird, welches unter Berücksichtigung des Referenzwinkels einen Spannungsraumzeiger bestimmt, der von einem Transformationsglied in ein anderes Koordinatensystem transformiert wird, insbesondere in ein Rotorflussorientiertes Koordinatensystem, und dieser transformierte Spannungsraumzeiger dann dem Wechselrichter als Stellgröße zur Verfügung gestellt wird.

Von Vorteil ist dabei, dass somit das Kennlinienfeld derart auswählbar ist, dass die Betriebspunkte möglichst Energie-sparend ausgewählt sind.

Bei der erfindungsgemäßen Ausgestaltung wird dem Bestimmungsmittel auch ein Drehmomentwert vorgegeben. Von Vorteil ist dabei, dass Drehzahl und Drehmoment vorgegeben sind und das Bestimmungsmittel daraus den Spannungsraumzeiger bestimmt, wobei der vom Beobachter bestimmte Referenzwinkel berücksichtigt wird.

Bei der erfindungsgemäßen Ausgestaltung bestimmt das Bestimmungsmittel zu dem zugeführten Wertepaar, also Drehmomentwert und Drehzahl-Istwert, aus einem Kennlinienfeld, insbesondere aus einem in einem Speicher abgelegten Kennlinienfeld, jeweils ein ausgangsseitiges Wertepaar, also Spannungsbetragswert und elektrischer Frequenzwert, wobei der elektrische Frequenzwert einem Integrierglied zugeleitet wird, dessen Ausgangswert zusammen mit dem Spannungsbetragswert einem weiteren Transformationsglied zugeführt wird, das einen Spannungsraumzeiger bestimmt, der von dem Transformationsglied in das andere Koordinatensystem transformiert wird, insbesondere in das Rotorfluss-orientierte Koordinatensystem, und dieser transformierte Spannungsraumzeiger dann dem Wechselrichter als Stellgröße zur Verfügung gestellt wird. Von Vorteil ist dabei, dass eine einfache schnelle Bestimmung der Betriebspunkte ermöglicht ist.

Bei einer nicht erfindungsgemäßen beispielhaften Ausgestaltung bestimmt das Bestimmungsmittel zu dem zugeführten Wertepaar, also Drehmomentwert und Drehzahl-Istwert, aus einem Kennlinienfeld, insbesondere aus einem in einem Speicher abgelegten Kennlinienfeld, jeweils ein ausgangsseitiges Wertepaar, also zwei Spannungsraumzeigerkomponenten des Spannungsraumzeiger einer Darstellung im rotorflussorientierten oder statorflussorientierten Koordinatensystem,
wobei die Komponenten von dem Transformationsglied in das andere Koordinatensystem transformiert wird, insbesondere in das Rotorfluss-orientierte Koordinatensystem, und dieser transformierte Spannungsraumzeiger dann dem Wechselrichter als Stellgröße zur Verfügung gestellt wird. Von Vorteil ist dabei, dass eine einfache schnelle Bestimmung der Betriebspunkte ermöglicht ist.

Bei einer nicht erfindungsgemäßen beispielhaften Ausgestaltung bestimmt das Bestimmungsmittel zu dem zugeführten Wertepaar, also Drehmomentwert und Drehzahl-Istwert, aus einem Kennlinienfeld, insbesondere aus einem in einem Speicher abgelegten Kennlinienfeld, jeweils ein ausgangsseitiges Wertepaar, also zwei Stromraumzeigerkomponenten des Stromraumzeiger einer Darstellung im rotorflussorientierten oder statorflussorientierten Koordinatensystem,
wobei die Komponenten jeweils als Sollwerte einem Regler zugeführt werden, denen jeweils auch ein Istwert des momentenbildenden beziehungsweise des flussbildenden Stromanteils zugeführt werden und deren Ausgangssignal jeweils eine Komponente eines vom Wechselrichter zu stellenden Spannungsraumzeigers sind, die von dem Transformationsglied in das andere Koordinatensystem transformiert wird, insbesondere in das Rotorfluss-orientierte Koordinatensystem, und dieser transformierte Spannungsraumzeiger dann dem Wechselrichter als Stellgröße zur Verfügung gestellt wird. Von Vorteil ist dabei, dass Von Vorteil ist dabei, dass eine einfache schnelle Bestimmung der Betriebspunkte ermöglicht ist, wobei schnelle Stromregler verwendet werden und somit die Regelgüte hoch ist.

Bei einer vorteilhaften Ausgestaltung wird der vom Beobachter ausgangsseitig bestimmte Drehzahl-Istwert, insbesondere nach einer nachfolgenden Tiefpassfilterung, nicht nur dem Bestimmungsmittel sondern auch einem Regler zugeführt, dem auch ein Sollwert zugeführt wird und aus dem Differenzwert zwischen Sollwert und Istwert der Drehmomentwert als Ausgangswert des Reglers bestimmt wird, wobei der Drehmomentwert dem Bestimmungsmittel zugeführt wird. Von Vorteil ist dabei, dass nur die Vorgabe eines Drehzahl-Sollwertes notwendig ist.

Bei einer vorteilhaften Ausgestaltung weist einer der Regler oder jeder der Regler einen P-Regler-Anteil, einen PI-Regler-Anteil und/oder einen PID-Regler-Anteil auf. Von Vorteil ist dabei, dass eine hohe Regelgüte erreichbar ist.

Bei der erfindungsgemäßen Ausgestaltung ist das Kennlinienfeld bestimmt, indem das zu dem eingangsseitigen Wertepaar, also Drehmomentwert und Drehzahl-Istwert, zugeordnete ausgangsseitige Wertepaar derart gewählt ist, dass eine minimale Verlustleistung im stationären Betrieb auftritt. Von Vorteil ist dabei, dass Energie eingespart wird.

Bei der erfindungsgemäßen Ausgestaltung ist zur Bestimmung des Kennlinienfeldes das ausgangsseitige Wertepaar derart gewählt, dass die Verlustleistung minimal ist unter der Nebenbedingung, dass der Betrag der Spannung und der Betrag des Stromes unter einem jeweiligen maximal zulässigen Wert bleibt oder diesem jeweiligen gleicht, wobei das Drehmoment dem Drehmomentwert und die Drehzahl dem Drehzahl-Istwert gleicht. Von Vorteil ist dabei, dass der Energieverbrauch reduziert ist.

Bei einer vorteilhaften Ausgestaltung ist als Verlustleistung die Summe der Statorwärmeverluste, der Rotorwärmeverluste, der Reibungsverluste der Eisenverluste und der Zusatzverluste. Von Vorteil ist dabei, dass eine einfach zu bestimmende Modellierung anwendbar ist.

Bei einer vorteilhaften Ausgestaltung sind die Statorstromwärmeverluste $P_{Cu,Stator} = 3R_{Stator}(T)(|I_{Stator}(U,f,s)|)^2$, wobei der komplexe Effektivwert des Statorstromes $I_{Stator}$ aus einer die Elektromaschine modellierenden FEM-Rechnung bestimmt wird und $R_{Stator}(T)$ den temperaturabhängigen Statorwiderstand bezeichnet, wobei T die Temperatur ist, wobei die Rotorstromwärmeverluste

$$P_{Cu,Rotor} = \frac{1}{p} 2\pi f_{Rotor} M(U,f,s)$$

sind, wobei das Drehmoment $M(U,f,s)$ aus

$$M(U,f,s) = 3p \cdot \frac{1}{\omega_s} \mathrm{Re}\{(U_{Stator} - R_{Stator}(T)I_{Stator}(U,f,s))I_{Stator}^*(U,f,s)\}$$

berechnet wird, wobei $p$ die Polpaarzahl, $\omega_s = 2\pi f$ die Kreisfrequenz des Spannungssystems, Re den Realteil einer komplexen Größe, $U_{Stator}$ den komplexen Effektivwert der Statorspannung und der Operator * die Konjugation einer komplexen Größe bezeichnet, wobei die Eisenverluste $P_{Fe}(U,f,s)$ aus der die Elektromaschine modellierenden FEM-Rechnung bestimmt werden, wobei die Reibungsverluste

$$P_{Reib} = P_{Reib,0} \left(\frac{n}{n_0}\right)^C$$

sind, wobei $P_{Reib,0}$ die Reibungsverluste bei der Nenndrehzahl $n_0$ der Elektromaschine beschreiben und der Exponent $C$ das drehzahlabhängige Verhalten der Reibungsverluste widerspiegelt, wobei beide Größen Messungen an der Elektromaschine bestimmt werden, und wobei die Zusatzverluste $P_{Zusatz}$ als ein Prozentualer Anteil der Wellenleistung beschrieben werden. Von Vorteil ist dabei, dass schnell und einfach bestimmbare Verlustleistungsarten berücksichtigbar sind.

Weitere Vorteile ergeben sich aus den Unteransprüchen.

Die Erfindung wird nun anhand von Abbildungen näher erläutert:

In der Figur 1 ist ein erfindungsgemäßes System dargestellt, wobei ein Bestimmungsmittel 10 vorgesehen ist.

In der Figur 2 ist eine erste Ausführung des Bestimmungsmittel 10 gezeigt.

In der Figur 3 ist eine nicht erfindungsgemäßen Ausführung des Bestimmungsmittel 10 gezeigt.

In der Figur 4 ist eine weitere nicht erfindungsgemäßen Ausführung des Bestimmungsmittel 10 gezeigt.

In der Figur 5 ist eine Weiterbildung eines weiteren Bestimmungsmittels 11 bezogen auf Figur 4 gezeigt.

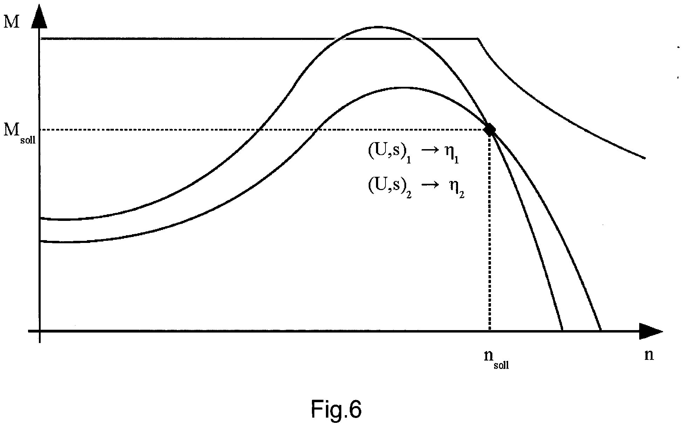

In der Figur 6 sind Drehmoment-Drehzahl-Kennlinien einer Elektromaschine des Systems gezeigt.

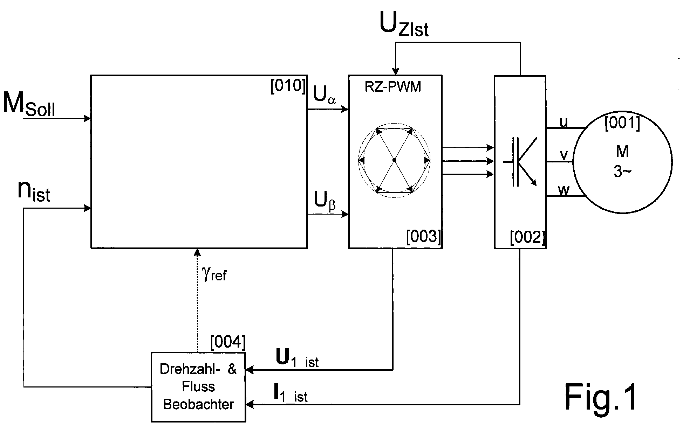

Wie in Figur 1 gezeigt wird eine elektrische Drehfeldmaschine, insbesondere Drehstrommotor 1, von einem pulsweitenmoduliert angesteuerter Wechselrichter 2 gespeist, dessen Ansteuersignale von einer PWM-Modulationseinheit 3 erzeugt werden, die nach dem Verfahren der Pulsweiten-Raumzeigermodulation arbeitet. Der Wechselrichter wird aus einer unipolaren Spannungsquelle, insbesondere Zwischenkreis, versorgt. Vorzugswiese wird diese Spannungsquelle durch einen netzgespeisten Gleichrichter dargestellt.

Die im Wechselrichter 2 erfasste, jeweils aktuelle Zwischenkreisspannung $U_z$ wird von der PWM-Modulationseinheit 3 bei der Erzeugung ihrer Ausgangssignale berücksichtigt.

Ein Bestimmungsmittel 10, welches eine funktionale Abhängigkeit seiner Ausgangsgrößen von seinen Eingangsgrößen darstellt, erzeugt einen Spannungsraumzeiger ($U_\alpha$, $U_\beta$) als Ausgangsgröße. Eingangsgröße ist der Drehmomentsollwert und ein Drehzahlistwert.

Der Drehzahlistwert und ein Winkel eines Referenzkoordinatensystems wird bestimmt von einem Drehzahl-/Fluss-Beobachter 4, dem als Eingangsgrößen der im Wechselrichter 2 erfasste Istwert des Motorstromraumzeigers und der von der PWM-Modulationseinheit 10 unter Berücksichtigung der Zwischenkreisspannung $U_z$ bestimmte Istwert des Motorspannungsraumzeigers.

Da die Elektromaschine eine über zwei an einem Gehäuse festgelegte Lager drehbar gelagerte Welle aufweist, ist der Drehmomentsollwert durch einen Skalar und nicht durch einen Raumzeiger, also Vektor, beschreibbar.

Die funktionale Abhängigkeit ist zumindest zweidimensional. Dabei wird aus den beiden Skalaren, also Drehmomentsollwert und Istdrehzahl, der Spannungsraumzeiger im entsprechenden Koordinatensystem bestimmt.

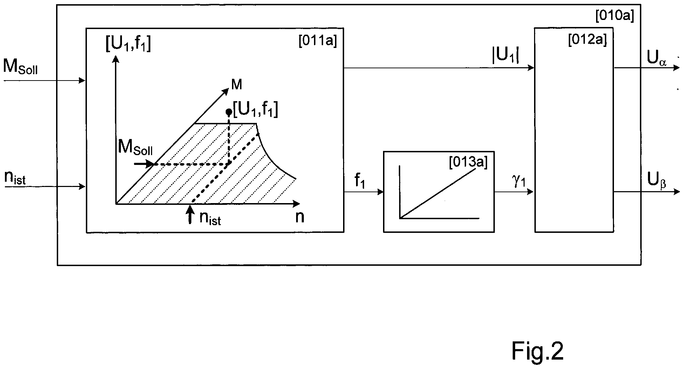

Der genauere Aufbau des Bestimmungsmittels 10 ist in Figur 2 gezeigt. Dabei wird in einem weiteren Bestimmungsmittel 11, aus einem in einem Speicher hinterlegten Kennlinienfeld dem jeweils aktuellen Wertepaar aus Drehmomentsollwert und Istdrehzahl ein Wertepaar bestimmt, das aus einem Spannungsbetrag und einer Frequenz besteht. Das somit erzeugte Frequenzsignal wird einem Integrationsglied 13 zugeführt, an dessen Ausgang somit ein Winkelwert erzeugt ist. Dem Transformationsglied 12 werden nun dieser Winkelwert und der Spannungsbetrag zugeführt, so dass der Spannungsraumzeiger in statorfesten kartesischen Koordinaten bestimmbar ist als Ausgangssignal des Transformationsglieds 12. Mittels des hinterlegten Kennlinienfeldes ist eine besonders schnelle und einfache Bestimmung der Ausgangsgrößen, also Spannungsbetrag und Frequenz, ermöglicht.

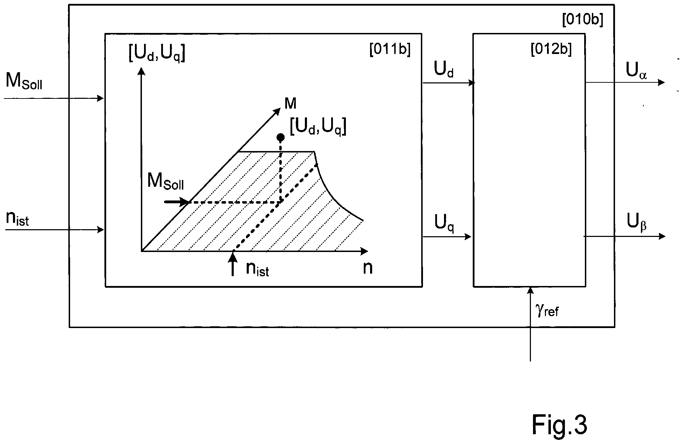

Bei einem nicht erfindungsgemäßen Ausführungsbeispiel wird gemäß der in Figur 3 gezeigten alternativen Ausführung des weiteren Bestimmungsmittels 11 im Unterschied zur Ausführung nach Figur 2 aus dem eingangsseitigen Wertepaar, also wiederum Drehmomentsollwert und Istdrehzahl, ein Wertepaar bestimmt, das aus den beiden Komponenten ($U_d$, $U_q$) des Spannungsraumzeigers in einem kartesischen Rotorflussorientierten oder Statorfluss-orientierten Koordinatensystem besteht. Der Spannungsraumzeiger wird also durch das Zweiertupel ($U_d$, $U_q$) dargestellt und das Koordinatensystem, insbesondere dessen d-Achsrichtung und q-Achsrichtung, ist mit dem Fluss mitdrehend. Der in diesem mitdrehenden Koordinatensystem dargestellte Spannungsraumzeiger ($U_d$, $U_q$) wird wiederum einem Transformationsglied 12 zugeführt, das im Unterschied zur Figur 2 nun die entsprechend andersartige Koordinatentransformation des Spannungsraumzeigers in ein statorfestes kartesisches Koordinatensystem ausführt. Dabei wird wiederum der vom Drehzahl-/Fluss-Beobachter 4 bestimmte Referenzwinkelwert $\gamma_{ref}$ berücksichtigt. Mittels des hinterlegten zweidimensionalen Kennlinienfeldes ist auch hier wiederum eine besonders schnelle und einfache Bestimmung der Ausgangsgrößen, also Spannungsbetrag und Frequenz, ermöglicht.

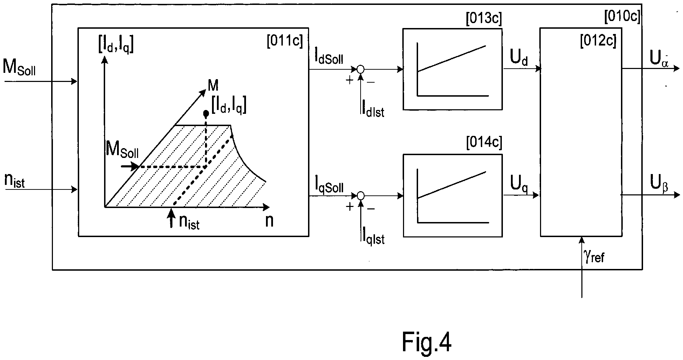

Bei einem weiteren nicht erfindungsgemäßen Ausführungsbeispiel wird gemäß Figur 4 im gezeigten alternativen Ausführung des weiteren Bestimmungsmittels 11 im Unterschied zur Ausführung nach Figur 2 aus dem eingangsseitigen Wertepaar, also wiederum Drehmomentsollwert und Istdrehzahl, ein Wertepaar bestimmt, das aus den beiden Komponenten ($I_d$, $I_q$) des Stator-Stromraumzeigers in einem kartesischen Rotorflussorientierten oder Statorfluss-orientierten Koordinatensystem besteht. Der Stromraumzeiger wird also durch das Zweiertupel ($I_d$, $I_q$) dargestellt und das Koordinatensystem, insbesondere dessen d-Achsrichtung und q-Achsrichtung, ist mit dem Fluss mitdrehend. Die beiden Komponenten werden jeweils einer Reglereinheit (13c, 14c) als jeweiliger Sollwert zugeführt. Diese Reglereinheiten (13c, 14c) bestimmen daraus und aus dem ihnen jeweils zugeführten Strom-Istwert ($I_{d,ist}$, $I_{d,soll}$) jeweils eine der Komponenten des Spannungsraumzeigers ($U_d$, $U_q$), die wiederum dem schon aus Figur 3 bekannten Transformationsglied 12 zugeführt werden. Somit wird als der Spannungsraumzeigers in ein statorfestes kartesisches Koordinatensystem transformiert. Dabei wird wiederum der vom Drehzahl-/Fluss-Beobachter 4 bestimmte Referenzwinkelwert $\gamma_{ref}$ berücksichtigt. Mittels des hinterlegten zweidimensionalen Kennlinienfeldes ist auch hier wiederum eine besonders schnelle und einfache Bestimmung der Ausgangsgrößen, also Spannungsbetrag und Frequenz, ermöglicht. Die Reglereinheiten (13c, 14c) sind entweder mit einem P-Regler-Anteil, mit einem PI-Regler-Anteil oder mit einem PID-Regler-Anteil ausgeführt.

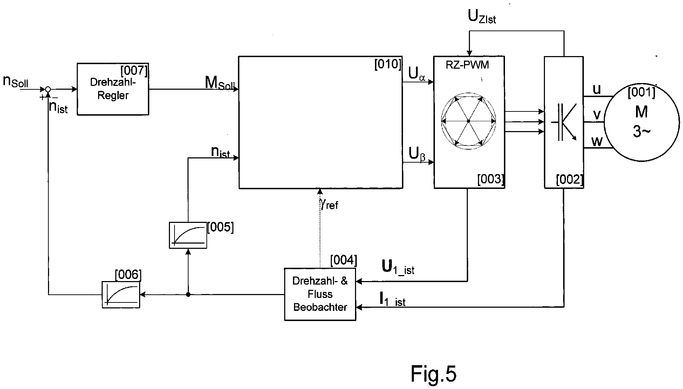

Bei einem weiteren nicht erfindungsgemäßen Ausführungsbeispiel wird gemäß Figur 5 wird der als Eingangsgröße dem Bestimmungsmittel 10 zugeführte Drehmomentwert mittels eines Drehmomentreglers bestimmt. Hierzu wird die vom Drehzahl-/Fluss-Beobachter 4 bestimmte und danach Tiefpass-gefilterte (5, 6) Istdrehzahl $n_{ist}$ einem Drehzahlregler 7 zugeführt, dem auch ein Sollwert für Drehzahl $n_{Soll}$ vorgebbar ist. Der Drehzahlregler 7 bestimmt aus der Regelabweichung, also der Differenz zwischen Sollwert $n_{Soll}$ und Istwert $n_{ist}$, den vom Bestimmungsmittel 10 als Eingangsgröße verwendeten Drehmomentwert $M_{Soll}$ und ist mit einem P-Regler-Anteil, mit einem PI-Regler-Anteil oder mit einem PID-Regler-Anteil ausgeführt.

Zur Bestimmung des Kennlinienfeldes für das Ausführungsbeispiel nach Figur 2 wird folgendes Bestimmungsverfahren angewendet:

Wenn die Elektromaschine als Asynchronmaschine ausgeführt wird, ist ein gewünschter Betriebspunkt, welcher einen zugehörigen Drehzahlwert $n_{Soll}$ und einen zugehörigen Drehmomentwert $M_{Soll}$ aufweist, durch verschiedene Motorspannungswerte U, Schlupfwerte s und vom Wechselrichter ausgangsseitig erzeugte Frequenzwerte f erzeugbar.

Mittels einer FEM Rechnung wird für den stationären Betriebsfall der Statorstromraumzeiger bestimmt, also Strombetrag und Phasenlage. Außerdem werden die Eisenverluste hieraus bestimmt gemäß einem Modell.

Zur Bestimmung des optimalen Wertetripels (U, f, s) wird ein Minimum der Verlustleistung $P_V$ bestimmt unter den Nebenbedingungen,

- dass die Drehzahl n dem zugehörigen Drehzahlwert $n_{Soll}$,
- dass das Drehmoment M dem zugehörigen Drehmomentwert $M_{Soll}$ entspricht,
- dass die vom Wechselrichter auszugebende Spannung U betragsmäßig kleiner oder gleich ist dem maximal zulässigen Spannungswert $U_{max}$ und
- dass der Betrag des Stromraumzeigers I kleiner ist oder gleich ist dem maximal zulässigen Strombetrag $I_{max}$.

Für jeden Betriebspunkt ($n_{soll}$, $M_{soll}$) wird also die optimale Ansteuerung (U,f,s) als Lösung des Optimierungsproblems

$$P_V(U, f, s) \rightarrow \min!$$

unter den Nebenbedingungen

$$n = n_{soll}$$

$$M = M_{soll}$$

$$U \leq U_{max}$$

$$I \leq I_{max}$$

Berechnet.

Dabei ist die Verlustleistung $P_V$ gebildet aus den in jeweiligen Modellen beschriebenen Einzelverlustleistungen mit: +

$$P_V(U, f, s) = P_{Cu,Stator} + P_{Cu,Rotor} + P_{Fe} + P_{Reib} + P_{Zusatz}$$

Dabei sind:

Die Statorstromwärmeverluste $P_{Cu,Stator} = 3R_{Stator}(T)(|I_{Stator}(U,f,s)|)^2$, wobei der komplexe Effektivwert des Statorstromes $I_{Stator}$ aus der FEM-Rechnung als komplexe Größe hervorgeht, und $R_{Stator}(T)$ den temperaturabhängigen Statorwiderstand bezeichnet,

die Rotorstromwärmeverluste $P_{\text{Cu,Rotor}} = \frac{1}{p} 2\pi f_{\text{Rotor}} M(U, f, s)$, wobei das Drehmoment

$$M(U, f, s) \text{ aus } M(U, f, s) = 3p \cdot \frac{1}{\omega_s} \text{Re}\left\{\left(U_{\text{Stator}} - R_{\text{Stator}}(T) I_{\text{Stator}}(U, f, s)\right) I_{\text{Stator}}^*(U, f, s)\right\}$$

berechnet wird, wobei p die Polpaarzahl, $\omega_s = 2\pi f$ die Kreisfrequenz des Spannungssystems, Re den Realteil einer komplexen Größe, $U_{\text{Stator}}$ den komplexen Effektivwert der Statorspannung und der Operator * die Konjugation einer komplexen Größe bezeichnet,

die Eisenverluste $P_{\text{Fe}}(U,f,s)$, die als direktes Ergebnis aus der FEM-Rechnung entstehen und beispielsweise über Polynomfits beschrieben werden,

die Reibungsverluste $P_{\text{Reib}} = P_{\text{Reib,0}} \left(\frac{n}{n_0}\right)^C$ wobei $P_{\text{Reib,0}}$ die Reibungsverluste bei der Nenndrehzahl $n_0$ beschreiben und der Exponent C das drehzahlabhängige Verhalten der Reibungsverluste widerspiegelt, wobei beide Größen Messungen an der Elektromaschine bestimmt werden, und

die Zusatzverluste $P_{\text{Zusatz}}$, die als ein Prozentualer Anteil der Wellenleistung beschrieben werden.

Wenn die Elektromaschine als Synchronmaschine ausgeführt wird, wird der gewünschte Betriebspunkt mittels des in der DE 10 2011 013 128 A1 oder DE 10 2011 009 935 A1 beschriebenen Verfahrens bestimmt.

Bezugszeichenliste

| 1 | Drehstrommotor |
|---|---|
| 2 | pulsweitenmoduliert angesteuerter Wechselrichter |
| 3 | PWM-Modulationseinheit |
| 4 | Drehzahl-/Fluss-Beobachter |
| 5 | Tiefpass |
| 6 | Tiefpass |
| 7 | Drehzahlregler |
| 10 | Bestimmungsmittel |
| 11 | weiteres Bestimmungsmittel |
| 12 | Transformationsglied |
| 13 | Integrationsglied |
| 13c | Reglereinheit |
| 14c | Reglereinheit |

**Patentansprüche**

1. System zum Betreiben einer wechselrichtergespeisten elektrischen Drehfeldmaschine,
wobei der Motorstrom erfasst wird und daraus ein Statorstromraumzeiger bestimmt wird,
wobei der Statorspannungsraumzeiger bestimmt wird aus zumindest einem erfassten Spannungswert, insbesondere Zwischenkreisspannungswert, insbesondere und gegebenenfalls aus einem vom Wechselrichter (2) ausgegebenen Pulsweitenmodulationssignal, insbesondere Pulsweitenmodulationsanteil,
wobei der Statorstromraumzeiger und der Statorspannungsraumzeiger einem Beobachter (4) zugeführt werden, der daraus einerseits einen Referenzwinkel bestimmt und andererseits einen Drehzahl-Istwert,
welcher einem Bestimmungsmittel (10) zugeführt wird, welches unter Berücksichtigung des Referenzwinkels einen Spannungsraumzeiger bestimmt, der von einem Transformationsglied (12) in ein anderes Koordinatensystem transformiert wird, insbesondere in ein Rotorflussorientiertes Koordinatensystem, und dieser transformierte Spannungsraumzeiger dann dem Wechselrichter (2) als Stellgröße zur Verfügung gestellt wird,
wobei dem Bestimmungsmittel auch ein Drehmomentwert vorgegeben wird, **dadurch gekennzeichnet,**

**dass** das Bestimmungsmittel (10) zu dem zugeführten Wertepaar, also Drehmomentwert und Drehzahl-Istwert, aus einem Kennlinienfeld, insbesondere aus einem in einem Speicher abgelegten Kennlinienfeld, jeweils ein ausgangsseitiges Wertepaar, also Spannungsbetragswert und elektrischer Frequenzwert, bestimmt,

wobei der elektrische Frequenzwert einem Integrierglied zugeleitet wird, dessen Ausgangswert zusammen mit dem Spannungsbetragswert einem weiteren Transformationsglied (12) zugeführt wird, das einen Spannungsraumzeiger bestimmt, der von dem Transformationsglied (12) in das andere Koordinatensystem transformiert wird, insbesondere in das Rotorfluss-orientierte Koordinatensystem, und dieser transformierte Spannungsraumzeiger dann dem Wechselrichter (2) als Stellgröße zur Verfügung gestellt wird,

wobei das Kennlinienfeld bestimmt ist, indem das zu dem eingangsseitigen Wertepaar, also Drehmomentwert und Drehzahl-Istwert, zugeordnete ausgangsseitige Wertepaar derart gewählt ist, dass eine minimale Verlustleistung im stationären Betrieb auftritt,

wobei zur Bestimmung des Kennlinienfeldes das ausgangsseitige Wertepaar derart gewählt ist, dass die Verlustleistung minimal ist unter der Nebenbedingung, dass der Betrag der Spannung und der Betrag des Stromes unter einem jeweiligen maximal zulässigen Wert bleibt oder diesem jeweiligen gleicht,

wobei das Drehmoment dem Drehmomentwert und die Drehzahl dem Drehzahl-Istwert gleicht..

2. System nach dem Anspruch 1, **dadurch gekennzeichnet, dass**
der vom Beobachter (4) ausgangsseitig bestimmte Drehzahl-Istwert, insbesondere nach einer nachfolgenden Tiefpassfilterung, nicht nur dem Bestimmungsmittel (10) sondern auch einem Regler zugeführt wird, dem auch ein Sollwert zugeführt wird und aus dem Differenzwert zwischen Sollwert und Istwert der Drehmomentwert als Ausgangswert des Reglers bestimmt wird, wobei der Drehmomentwert dem Bestimmungsmittel (10) zugeführt wird.

3. System nach einem der vorangegangenen Ansprüche,
**dadurch gekennzeichnet, dass**
einer der Regler oder jeder der Regler einen P-Regler-Anteil, einen PI-Regler-Anteil und/oder einen PID-Regler-Anteil aufweist.

4. System nach einem der vorangegangenen Ansprüche,
**dadurch gekennzeichnet, dass**
als Verlustleistung die Summe der Statorwärmeverluste, der Rotorwärmeverluste, der Reibungsverluste der Eisenverluste und der Zusatzverluste ist,

5. System nach einem der vorangegangenen Ansprüche,
**dadurch gekennzeichnet, dass**
die Statorstromwärmeverluste $P_{\text{Cu,Stator}} = 3R_{\text{Stator}}(T)(|I_{\text{Stator}}(U,f,s)|)^2$ sind, wobei der komplexe Effektivwert des Statorstromes $I_{\text{Stator}}$ aus einer die Elektromaschine modellierenden FEM-Rechnung bestimmt wird und $R_{\text{Stator}}(T)$ den temperaturabhängigen Statorwiderstand bezeichnet, wobei T die Temperatur ist,
wobei die Rotorstromwärmeverluste

$$P_{\text{Cu,Rotor}} = \frac{1}{p} 2\pi f_{\text{Rotor}} M(U,f,s)$$

sind, wobei das Drehmoment $M(U,f,s)$ aus

$$M(U,f,s) = 3p \cdot \frac{1}{\omega_s} \operatorname{Re}\left\{\left(U_{\text{Stator}} - R_{\text{Stator}}(T)I_{\text{Stator}}(U,f,s)\right)I_{\text{Stator}}^{*}(U,f,s)\right\}$$

berechnet wird, wobei $p$ die Polpaarzahl, $\omega_s = 2\pi f$ die Kreisfrequenz des Spannungssystems, Re den Realteil einer komplexen Größe, $U_{\text{Stator}}$ den komplexen Effektivwert der Statorspannung und der Operator * die Konjugation einer komplexen Größe bezeichnet,
wobei die Eisenverluste $P_{\text{Fe}}(U,f,s)$ aus der die Elektromaschine modellierenden FEM-Rechnung bestimmt werden,
wobei die Reibungsverluste

$$P_{\text{Reib}} = P_{\text{Reib},0}\left(\frac{n}{n_0}\right)^{c}$$

sind, wobei $P_{Reib,0}$ die Reibungsverluste bei der Nenndrehzahl $n_0$ der Elektromaschine beschreiben und der Exponent $C$ das drehzahlabhängige Verhalten der Reibungsverluste widerspiegelt, wobei beide Größen Messungen an der Elektromaschine bestimmt werden, und

wobei die Zusatzverluste $P_{Zusatz}$ als ein Prozentualer Anteil der Wellenleistung beschrieben werden.

**Claims**

1. System for operating an inverter-powered electrical induction machine,

   the motor current being detected and a stator current space vector being determined therefrom,

   the stator current space vector being determined from at least one detected voltage value, in particular a DC-link voltage value, in particular and where applicable from a pulse-width modulation signal, in particular a pulse-width modulation portion, emitted by the inverter (2), the stator current space vector and the stator voltage space vector being supplied to an observer (4), which determines therefrom both a reference angle and an actual speed value, which is supplied to a determination means (10), which, taking account of the reference angle, determines a voltage space vector, which is transformed into a different coordinate system by a transformation member (12), in particular into a rotor-flux-oriented coordinate system, and said transformed voltage space vector is then provided to the inverter (2) as a manipulated variable,

   a torque value also being specified to the determination means,

   **characterised in that**

   with respect to the supplied pair of values, i.e. the torque value and the actual speed value, the determination means (10) in each case determines an output-side pair of values, i.e. a voltage magnitude value and an electrical frequency value, from a characteristic map, in particular from a characteristic map stored in a memory,

   the electrical frequency value being fed to an integrating member, the output value of which is supplied, together with the voltage magnitude value, to a further transformation member (12), which determines a voltage space vector, which is transformed into the different coordinate system by the transformation member (12), in particular into the rotor-flux-oriented coordinate system, and said transformed voltage space vector is then provided to the inverter (2) as a manipulated variable,

   the characteristic map being determined by selecting the output-side pair of values associated with the input-side pair of values, i.e. the torque value and actual speed value, such that minimal power loss occurs during stationary operation,

   in order to determine the characteristic map, the output-side pair of values being selected such that the power loss is minimal, subject to the side-constraint that the magnitude of the voltage and the magnitude of the current either remain below or are equal to respective maximum permitted values,

   the torque equalling the torque value and the speed equalling the actual speed value.

2. System according to claim 1,

   **characterised in that**

   the actual speed value determined at the output by the observer (4), in particular following subsequent low-pass filtering, is supplied not only to the determination means (10) but also to a controller, to which a setpoint is also supplied, and the torque value is determined as the output value of the controller from the difference value between the setpoint and the actual value, the torque value being supplied to the determination means (10).

3. System according to any of the preceding claims,

   **characterised in that**

   one of the controllers or each controller has a P controller portion, a PI controller portion and/or a PID controller portion.

4. System according to any of the preceding claims,

   **characterised in that**

   the power loss is the total of the stator heat losses, the rotor heat losses, the frictional losses, the core losses and the stray losses.

5. System according to any of the preceding claims,

   **characterised in that**

   the stator current heat losses are $P_{Cu,Stator}=3R_{Stator}(T)(|I_{Stator}(U,f,s)|)^2$, where the complex effective value of the stator current $I_{stator}$ is determined from an FEM calculation modelling the electric machine, and $R_{stator}(T)$ denotes the temperature-dependent stator resistance, where T is the temperature,

   the rotor current heat losses being

$$P_{\text{Cu,Rotor}} = \frac{1}{p} 2\pi f_{\text{Rotor}} M(U,f,s)$$

where the torque $M(U,f,s)$ is calculated from

$$M(U,f,s) = 3p \cdot \frac{1}{\omega_s} \text{Re}\{(U_{\text{Stator}} - R_{\text{Stator}}(T)I_{\text{Stator}}(U,f,s))I^*_{\text{Stator}}(U,f,s)\}$$

where p denotes the number of pole pairs, $\omega_s = 2\pi f$ denotes the angular frequency of the voltage system, Re denotes the real part of a complex variable, $U_{\text{stator}}$ denotes the complex effective value of the stator voltage and the operator * denotes the conjugation of a complex variable,
the core losses $P_{\text{Fe}}(U,f,s)$ being determined from the FEM calculation modelling the electric machine,
the frictional losses being

$$P_{\text{fric}} = P_{\text{fric},0} \left(\frac{n}{n_D}\right)^c,$$

where $P_{\text{fric},0}$ describes the frictional losses at the nominal speed $n_D$ of the electric machine, and the exponent $c$ reflects the speed-dependent behaviour of the frictional losses, these two variables being determined measurements on the electric machine, and
the stray losses $P_{\text{stray}}$ being described as a percentage share of the shaft power.

**Revendications**

1. Système pour faire fonctionner une machine électrique à champ tournant alimentée par onduleur,
dans lequel le courant de moteur est détecté et un vecteur spatial de courant de stator est déterminé à partir de celui-ci,
dans lequel le vecteur spatial de tension de stator est déterminé à partir d'au moins une valeur de tension détectée, en particulier d'une valeur de tension de circuit intermédiaire, en particulier et éventuellement à partir d'un signal de modulation de largeur d'impulsion, en particulier d'une composante de modulation de largeur d'impulsion, délivré(e) par l'onduleur (2),
dans lequel le vecteur spatial de courant de stator et le vecteur spatial de tension de stator sont amenés à un observateur (4) qui détermine à partir de ceux-ci d'une part un angle de référence et d'autre part une valeur réelle de vitesse de rotation,
laquelle est amenée à un moyen de détermination (10) qui, en tenant compte de l'angle de référence, détermine un vecteur spatial de tension qui est transformé par un élément de transformation (12) dans un autre système de coordonnées, en particulier dans un système de coordonnées orienté sur le flux de rotor, et ce vecteur spatial de tension transformé est ensuite mis à la disposition de l'onduleur (2) en tant que variable réglante,
dans lequel une valeur de couple est également prédéfinie au moyen de détermination,
**caractérisé en ce que**
le moyen de détermination (10) détermine, pour la paire de valeurs fournie, c'est-à-dire une valeur de couple et une valeur réelle de vitesse de rotation, à partir d'un réseau de courbes caractéristiques, en particulier à partir d'un réseau de courbes caractéristiques stocké dans une mémoire, une paire respective de valeurs côté sortie, c'est-à-dire une valeur absolue de tension et une valeur de fréquence électrique,
dans lequel la valeur de fréquence électrique est fournie à un élément d'intégration, dont la valeur de sortie est amenée avec la valeur absolue de tension à un autre élément de transformation (12) qui détermine un vecteur spatial de tension qui est transformé par l'élément de transformation (12) dans l'autre système de coordonnées, en particulier dans le système de coordonnées orienté sur le flux du rotor, et ce vecteur spatial de tension transformé est ensuite mis à la disposition de l'onduleur (2) en tant que variable réglante,
dans lequel le réseau de courbes caractéristiques est déterminé en choisissant la paire de valeurs côté sortie associée à la paire de valeurs côté entrée, c'est-à-dire à la valeur de couple et à la valeur réelle de vitesse de rotation, de telle sorte qu'il se produise une perte de puissance minimale en régime stationnaire,
dans lequel, pour déterminer le réseau de courbes caractéristiques, la paire de valeurs côté sortie est choisie de telle sorte que la perte de puissance soit minimale à la condition secondaire que la valeur absolue de la tension et la valeur absolue du courant restent inférieures ou égales à une valeur maximale admissible respective, dans lequel le couple est égal à la valeur de couple et la vitesse de rotation à la valeur réelle de vitesse de rotation.

2. Système selon la revendication 1,
   **caractérisé en ce que**
   la valeur réelle de vitesse de rotation déterminée côté sortie par l'observateur (4), en particulier après un filtrage passe-bas consécutif, est amenée non seulement au moyen de détermination (10) mais aussi à un régulateur auquel est également amenée une valeur de consigne et, à partir de la valeur de différence entre la valeur de consigne et la valeur réelle, la valeur de couple est déterminée en tant que valeur de sortie du régulateur, la valeur de couple étant amenée au moyen de détermination (10).

3. Système selon l'une des revendications précédentes,
   **caractérisé en ce que**
   l'un des régulateurs ou chacun des régulateurs présente une composante de régulateur P, une composante de régulateur PI et/ou une composante de régulateur PID.

4. Système selon l'une des revendications précédentes,
   **caractérisé en ce que**
   la perte de puissance est la somme des pertes par effet Joule au stator, des pertes par effet Joule au rotor, des pertes par frottement, des pertes dans le fer et des pertes supplémentaires.

5. Système selon l'une des revendications précédentes,
   **caractérisé en ce que**
   les pertes par effet Joule au stator sont $P_{\text{Cu,Stator}} = 3R_{\text{Stator}}(T)(|I_{\text{Stator}}(U,f,s)|)^2$, où la valeur efficace complexe du courant de stator $I_{\text{Stator}}$ est déterminée à partir d'un calcul par la méthode des éléments finis (FEM) modélisant la machine électrique et $R_{\text{Stator}}(T)$ désigne la résistance de stator dépendante de la température, T étant la température,

   dans lequel les pertes par effet Joule au rotor sont $P_{Cu,Rotor} = \frac{1}{p} 2\pi f_{Rotor} M(U,f,s)$ où le couple $M(U,f,s)$ est calculé à partir de

$$M(U,f,s) = 3p \cdot \frac{1}{\omega_s} Re\{(U_{Stator} - R_{Stator}(T)I_{Stator}(U,f,s))I_{Stator}^*(U,f,s)\},$$

   où p est le nombre de paires de pôles, $\omega_s = 2\pi f$ est la fréquence angulaire du système de tension, Re est la partie réelle d'une grandeur complexe, $U_{Stator}$ est la valeur efficace complexe de la tension de stator, et l'opérateur * indique la conjugaison d'une grandeur complexe,
   dans lequel les pertes dans le fer $P_{\text{Fe}}(U,f,s)$ sont déterminées à partir du calcul FEM modélisant la machine électrique,

   dans lequel les pertes par frottement sont $P_{Reib} = P_{Reib,0}(\frac{n}{n_0})^C$, où $P_{Reib,0}$ décrit les pertes par frottement à la vitesse de rotation nominale $n_0$ de la machine électrique et l'exposant C reflète le comportement des pertes par frottement en fonction de la vitesse de rotation, les deux grandeurs étant déterminées par des mesures sur la machine électrique, et dans lequel les pertes supplémentaires $P_{Zusatz}$ sont décrites sous la forme d'un pourcentage de la puissance à l'arbre.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006004034 A1
- US 5565752 A
- US 6194865 B1
- DE 102011013128 A1
- DE 102011009935 A1


**In der Beschreibung aufgeführte Nicht-Patentliteratur**

- Neural network based estimation of feedback signals for a vector controlles induction motor drive. **GODOY SIMONES M et al.** INDUSTRY APPLICATIONS SOCIETY ANNUAL MEETING, 1994 , Conference record of the 1994 IEEE Denver. IEEE, 02. Oktober 1994, 471-479